# EUROPEAN PATENT APPLICATION

(11) **EP 4 783 659 A1**
(43) Date of publication of application: **29.07.2026**
(21) Application number: 24867278.4
(22) Date of filing: 02.09.2024
(51) Int. Cl.: H04W 28/02, H04W 76/10, H04W 76/30

(54) **INFORMATION TRANSMISSION METHOD AND APPARATUS, INFORMATION ACQUISITION METHOD AND APPARATUS, AND COMMUNICATION DEVICE**

(30) Priority: 18.09.2023 CN 202311201765
(71) Applicant: Datang Mobile Communications Equipment Co., Ltd., Beijing 100085 (CN)
(72) Inventor: GU, Xiaofei, Beijing 100085 (CN)
(74) Representative: Studio Torta S.p.A.
(86) International application number: PCT/CN2024/116200
(87) International publication number: WO 2025/060866

(57) **Abstract**

The present disclosure provides an information transmission method and device, an information obtaining method and device and a communication device. The method performed by a first network function, includes: transmitting a quality of service (QoS) profile and/or QoS rule to an access network device; and/or, transmitting a QoS rule to a second network function, wherein the second network function is used to implement user plane management. The first network function is used to implement session management.

## Description

The present application is filed based on and claims the priority of Chinese Application No. 202311201765.7 filed on September 18, 2023, entitled "information transmission method and device, information obtaining method and device and communication device", the disclosure of which are incorporated in their entireties by reference herein.

### TECHNICAL FIELD

The present disclosure relates to the field of communication technology, and in particular to an information transmission method and device, information obtaining method and device and communication device.

### BACKGROUND

After Radio Access Network (RAN) is service-based (N2 interface service-based, RAN control plane service-based, etc.), an anchor point between the network and RAN is no longer Access and Mobility Management Function (AMF). RAN can interact with any network function (NF) in need for signaling and process establishment. For example, the RAN can interact with the AMF for mobility-related procedures, with Session Management Function (SMF) for session-related procedures, and with Location Management Function (LMF) for positioning-related procedures. The related Quality of Service (QoS) control information is then transmitted by SMF to RAN and User Equipment (UE) through AMF, or AMF is responsible for QoS management. This can no longer meet system requirements under the RAN service-based architecture and cannot carry out normal service operations.

### SUMMARY

The embodiments of the present disclosure provide an information transmission method and device, information obtaining method and device and communication device, which can solve the QoS information transmission problem under a service-based RAN architecture, thereby reducing signaling transmission and lowering transmission delay.

In order to solve the above technical problem, one embodiment of the present disclosure provides an information transmission method, performed by a first network function, including:
transmitting a quality of service (QoS) profile and/or QoS rule to an access network device; and/or
transmitting a QoS rule to a second network function, wherein the second network function is used to implement user plane management;
wherein the first network function is used to implement session management.

In some embodiments, the transmitting a quality of service (QoS) profile and/or QoS rule to an access network device, includes:
transmitting the QoS profile and/or QoS rule to the access network device by calling a service-based interface with the access network device.

In some embodiments, the transmitting a QoS rule to a second network function, includes:
transmitting a session establishment request or a session modification request to the second network function, wherein the session establishment request or the session modification request includes the QoS rule.

In some embodiments, the method further includes:
receiving a PDU session establishment request message or a PDU session modification request message, wherein the PDU session establishment request message or the PDU session modification request message carries a QoS requirement;
generating the QoS profile and/or QoS rule according to the QoS requirement.

In some embodiments, the method further includes:
deleting, in a PDU session release process, QoS information allocated when the PDU session is established for the user equipment, wherein the QoS information includes part or all of information in the QoS profile and/or QoS rule.

In some embodiments, the deleting, in a PDU session release process, QoS information allocated when the PDU session is established for the user equipment, includes :
receiving a PDU session release request transmitted by the user equipment through the access network device;
according to the PDU session release request, deleting the QoS information allocated when the PDU session is established for the user equipment.

In some embodiments, the PDU session release request includes Qos information that needs to be released.

One embodiment of the present disclosure provides an information obtaining method, performed by an access network device, including:
receiving a quality of service (QoS) profile and/or a QoS rule transmitted by a first network function;
wherein the first network function is used to implement session management.

In some embodiments, the method further includes:
in case of receiving the QoS rule transmitted by the first network function, transmitting the QoS rule to a user equipment.

In some embodiments, the receiving a quality of service (QoS) profile and/or a QoS rule transmitted by a first network function, includes:
receiving the QoS profile and/or rule transmitted by the first network function by calling a service-based interface between the first network function and the access network; or
receiving the QoS profile transmitted by the first network function by calling a service-based interface between the first network function and the access network, and/or receiving the QoS rule transmitted by the first network function through a second network function, where the second network function is used to implement user plane management.

In some embodiments, the method further includes:
deleting, in a packet data unit (PDU) session release process, part or all of information included in the QoS profile.

In some embodiments, the deleting, in a packet data unit (PDU) session release process, part or all of information included in the QoS profile, includes:
after receiving a PDU session release request transmitted by the user equipment or a PDU session release response transmitted by the first network function, deleting part or all of the information included in the QoS profile.

In some embodiments, the PDU session release request includes QoS information, and the QoS information includes part or all of the information included in the QoS profile.

In some embodiments, the method further includes:
receiving a PDU session establishment request message or a PDU session modification request message transmitting by the user equipment, wherein the PDU session establishment request message or the PDU session modification request message carries a QoS requirement;
transmitting the PDU session establishment request message or the PDU session modification request message to the first network function.

One embodiment of the present disclosure provides an information transmission method, performed by a user equipment, including
receiving a quality of service (QoS) rule transmitted by an access network device;
wherein the QoS rule is transmitted to the access network device by a first network function or a second network function, the first network function is used to implement session management, and the second network function is used to implement user plane management.

In some embodiments, the method further includes:
transmitting a PDU session establishment request message or a PDU session modification request message to the first network function, where the PDU session establishment request message or the PDU session modification request message carries a QoS requirement.

In some embodiments, the method further includes:
transmitting a PDU session release request to the access network device, wherein the PDU session release request includes QoS information that needs to be released, and the QoS information includes part or all of information in the QoS profile and/or QoS rule.

In some embodiments, the method further includes:
in a packet data unit PDU session release process, deleting the QoS rule.

One embodiment of the present disclosure provides an information transmission method, performed by a second network function, including:
receiving a quality of service (QoS) rule transmitted by a first network function;
transmitting the QoS rule to the access network device;
wherein the second network function is used to implement user plane management.

In some embodiments, the receiving a quality of service (QoS) rule transmitted by a first network function, includes:
receiving a session establishment request or a session modification request transmitted by the first network function;
wherein the session establishment request or session modification request includes the QoS rule.

One embodiment of the present disclosure provides a communication device which is a first network function, including a memory, a transceiver, and a processor;
wherein the memory is used to store a computer program; the transceiver is used to send and receive data under control of the processor; the processor is used to read the computer program in the memory and perform the following operations:
transmitting a quality of service (QoS) profile and/or QoS rule to an access network device via the transceiver; and/or
transmitting a QoS rule to a second network function, wherein the second network function is used to implement user plane management;
wherein the first network function is used to implement session management.

In some embodiments, the processor is used to read the computer program in the memory and perform the following operations:
transmitting the QoS profile and/or QoS rule to the access network device by calling a service-based interface with the access network.

In some embodiments, the processor is used to read the computer program in the memory and perform the following operations:
transmitting a session establishment request or a session modification request to the second network function, wherein the session establishment request or the session modification request includes the QoS rule.

In some embodiments, the processor is used to read the computer program in the memory and perform the following operations:
receiving a PDU session establishment request message or a PDU session modification request message, wherein the PDU session establishment request message or the PDU session modification request message carries a QoS requirement;
generating the QoS profile and/or QoS rule according to the QoS requirement.

In some embodiments, the processor is used to read the computer program in the memory and perform the following operations:
in a PDU session release process, deleting QoS information allocated when the PDU session is established for the user equipment, where the QoS information includes part or all of information in the QoS profile and/or QoS rule.

In some embodiments, the processor is used to read the computer program in the memory and perform the following operations:
receiving a PDU session release request transmitted by the user equipment through the access network device;
according to the PDU session release request, deleting the QoS information allocated when the PDU session is established for the user equipment.

In some embodiments, the PDU session release request includes QoS information that needs to be released.

One embodiment of the present disclosure provides a communication device which is am access network device, including a memory, a transceiver, and a processor;
wherein the memory is used to store a computer program; the transceiver is used to send and receive data under control of the processor; the processor is used to read the computer program in the memory and perform the following operations:
receiving a quality of service (QoS) profile and/or a QoS rule transmitted by a first network function via the transceiver;
wherein the first network function is used to implement session management.

In some embodiments, the processor is used to read the computer program in the memory and perform the following operations:
in case of receiving the QoS rule transmitted by the first network function, transmitting the QoS rule to a user equipment.

In some embodiments, the processor is used to read the computer program in the memory and perform the following operations:
receiving the QoS profile and/or rule transmitted by the first network function by calling a service-based interface between the first network function and the access network; or
receiving the QoS profile transmitted by the first network function by calling a service-based interface between the first network function and the access network, and/or receiving the QoS rule transmitted by the first network function through a second network function, where the second network function is used to implement user plane management.

In some embodiments, the processor is used to read the computer program in the memory and perform the following operations:
deleting, in a packet data unit (PDU) session release process, part or all of information included in the QoS profile.

In some embodiments, the processor is used to read the computer program in the memory and perform the following operations:
after receiving a PDU session release request transmitted by the user equipment or a PDU session release response transmitted by the first network function, deleting part or all of the information included in the QoS profile.

In some embodiments, the PDU session release request includes QoS information, and the QoS information includes part or all of the information included in the QoS profile.

In some embodiments, the processor is used to read the computer program in the memory and perform the following operations:
receiving a PDU session establishment request message or a PDU session modification request message transmitting by the user equipment, wherein the PDU session establishment request message or the PDU session modification request message carries a QoS requirement;
transmitting the PDU session establishment request message or the PDU session modification request message to the first network function.

One embodiment of the present disclosure provides a communication device which is a user equipment, including a memory, a transceiver, and a processor;
wherein the memory is used to store a computer program; the transceiver is used to send and receive data under control of the processor; the processor is used to read the computer program in the memory and perform the following operations:
receiving a quality of service (QoS) rule transmitted by an access network device.
wherein the QoS rule is transmitted to the access network device by a first network function or a second network function, the first network function is used to implement session management, and the second network function is used to implement user plane management.

In some embodiments, the processor is used to read the computer program in the memory and perform the following operations:
transmitting a PDU session establishment request message or a PDU session modification request message to the first network function, where the PDU session establishment request message or the PDU session modification request message carries a QoS requirement.

In some embodiments, the processor is used to read the computer program in the memory and perform the following operations:
transmitting a PDU session release request to the access network device, wherein the PDU session release request includes QoS information that needs to be released, and the QoS information includes part or all of information in the QoS profile and/or QoS rule.

In some embodiments, the processor is used to read the computer program in the memory and perform the following operations:
in a packet data unit PDU session release process, deleting the QoS rule.

One embodiment of the present disclosure provides a communication device which is a second network function, including a memory, a transceiver, and a processor;
wherein the memory is used to store a computer program; the transceiver is used to send and receive data under control of the processor; the processor is used to read the computer program in the memory and perform the following operations:
receiving a quality of service (QoS) rule transmitted by a first network function;
transmitting the QoS rule to the access network device;
wherein the second network function is used to implement user plane management.

In some embodiments, the processor is used to read the computer program in the memory and perform the following operations:
receiving a session establishment request or a session modification request transmitted by the first network function;
wherein the session establishment request or session modification request includes the QoS rule.

One embodiment of the present disclosure provides an information transmission device, applied to a first network function, including:
a first transmission unit used to transmit a quality of service (QoS) profile and/or QoS rule to an access network device; and/or
transmit a QoS rule to a second network function, wherein the second network function is used to implement user plane management;
wherein the first network function is used to implement session management.

One embodiment of the present disclosure provides an information obtaining device, applied to an access network device, including:
a first receiving unit used to receive a quality of service (QoS) profile and/or a QoS rule transmitted by a first network function;
wherein the first network function is used to implement session management.

One embodiment of the present disclosure provides an information transmission device, applied to a user equipment, including:
a second receiving unit used to receive a quality of service (QoS) rule transmitted by an access network device;
wherein the QoS rule is transmitted to the access network device by a first network function or a second network function, the first network function is used to implement session management, and the second network function is used to implement user plane management.

One embodiment of the present disclosure provides an information transmission device, applied to a second network function, including:
a third receiving unit used to receive a quality of service (QoS) rule transmitted by a first network function;
a second transmission unit used to transmit the QoS rule to the access network device;
wherein the second network function is used to implement user plane management.

One embodiment of the present disclosure provides a processor-readable storage medium, including a computer program stored thereon; wherein the computer program is used to cause a processor to execute the above method.

The beneficial effects of the present disclosure are as follows.

In the above solution, the first network function responsible for session management directly transmits the QoS profile and/or QoS rules, thereby enabling the QoS profile and/or QoS rules to be transferred directly to the access network device and the second network function, eliminating the need for forwarding by the network function responsible for access and mobility management. This reduces signaling transmission and lowers transmission latency.

### BRIEF DESCRIPTION OF THE DRAWINGS

To better clarify technical solutions of embodiments of the present disclosure or in the related art, drawings used in descriptions of the embodiments or in the related art are briefly introduced hereinafter. Apparently, the described drawings merely illustrate some embodiments of the present disclosure. A person ordinary skilled in the art can obtain other drawings based on these drawings without any creative efforts.
FIG. 1 is a structural diagram of a network system applicable to an embodiment of the present disclosure;
FIG. 2 is a first schematic flow chart of an information transmission method according to an embodiment of the present disclosure;
FIG. 3 is a flow chart of an application scenario 1 according to an embodiment of the present disclosure;
FIG. 4 is a flow chart of an application scenario 2 according to an embodiment of the present disclosure;
FIG. 5 is a flow chart of an application scenario 3 according to an embodiment of the present disclosure;
FIG. 6 is a flow chart of an application scenario 4 according to an embodiment of the present disclosure;
FIG. 7 is a flow chart of an application scenario 5 according to an embodiment of the present disclosure;
FIG. 8 is a flow chart of an application scenario 6 according to an embodiment of the present disclosure;
FIG. 9 is a flow chart of an application scenario 7 according to an embodiment of the present disclosure;
FIG. 10 is a flow chart of an application scenario 8 according to an embodiment of the present disclosure;
FIG. 11 is a schematic flow chart of an information obtaining method according to an embodiment of the present disclosure;
FIG. 12 is a second schematic flow chart of an information transmission method according to an embodiment of the present disclosure;
FIG. 13 is a third schematic flow chart of an information transmission method according to an embodiment of the present disclosure;
FIG. 14 is a first schematic diagram showing units of an information transmission device according to an embodiment of the present disclosure;
FIG. 15 is a block diagram of a network device according to an embodiment of the present disclosure;
FIG. 16 is a schematic diagram showing units of an information obtaining device according to an embodiment of the present disclosure;
FIG. 17 is a structural diagram of an access network device according to an embodiment of the present disclosure;
FIG. 18 is a second schematic diagram showing units of an information transmission device according to an embodiment of the present disclosure;
FIG. 19 is a block diagram of a user equipment according to an embodiment of the present disclosure; and
FIG. 20 is a third schematic diagram showing units of an information transmission device according to an embodiment of the present disclosure.

### DETAILED DESCRIPTION

The technical solutions in embodiments of the present application are described clearly and completely in conjunction with drawings in the embodiments of the present application. Apparently, the described embodiments are merely a part of rather than all the embodiments of the present application. All other embodiments obtained by a person ordinary skilled in the art based on the embodiments of the present application without any creative efforts fall within the protection scope of the present application.

Terms such as "first" and "second" in the specification and the claims of the present application are used to distinguish similar objects and are not necessarily used to describe a specific order or sequence. It is to be understood that data used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

The term "and/or" in the embodiments of the present application describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it. The term "multiple" in the embodiments of the present application refers to two or more than two, and other words for expressing quantities are similar to it.

In embodiments of the present application, the expressions such as "exemplary" or "for example" are used to indicate an example, illustration, or description. Any embodiment or design solution described as "exemplary" or "for example" in the embodiments of the present application should not be construed as being preferred or advantageous over other embodiments or design solutions. Rather, the use of the expressions such as "exemplary" or "for example" is intended to present the relevant concepts in a specific manner.

An introduction to the relevant concepts associated with the present disclosure is briefly provided below.

### 1. Quality of Service (QoS)

QoS is a description of service transmission quality and also a guarantee mechanism for service transmission quality. Its purpose is to provide end-to-end service quality assurance for various services according to their different needs.

The concept of QoS flow is introduced in the QoS model of the 5th generation mobile communication technology (5G). the QoS flow is the smallest granularity for QoS processing. In the 5G, the QoS processing is performed based on the granularity of flow, and the network side forwards data packets based on QoS flow identifier (QFI).

### 2. QoS management

5GC and NG-RAN ensure the quality of service (such as reliability and target latency) by mapping packets to appropriate QoS flows and data radio bearers (DRBs). This involves two steps of mapping: a packet filtering mechanism of non-access stratum (NAS) layer is responsible for mapping application layer-related uplink and downlink user plane data (Internet Protocol (IP) flows) to QoS flows; an access stratum (AS) layer is responsible for mapping uplink and downlink QoS flows to DRBs.

At the NAS level, for any QoS flow:
SMF provides QoS profile and its corresponding QFI to RAN through AMF, or the QoS profile is pre-configured in the access network. Whether a QoS flow is of GBR type or non-GBR type depends on its corresponding QoS profile. The QoS profile includes QoS parameters and QoS attribute information (such as 5QI, ARP, GFBR, MFBR, maximum packet loss rate and RQA, etc.) that the QoS flow needs to meet during transmission. The RAN maps the QoS flow to the DRB based on the QoS profile and determines how the data is processed on the air interface. It can be seen that the QoS Profile is used for the RAN side.

The SMF can provide to UE through AMF, one or more quality of service rules (QoS rules) pre-configured on UE or derived by the UE through reflective QoS. The UE classifies and marks uplink user plane data based on the QoS rules, that is, determining association between uplink services and the QoS flows. It can be seen that the QoS rules are for UE.

The SMF provides one or more uplink and downlink packet detection rules (PDR) to the UPF. The PDR includes information for classifying and processing packets arriving at the UPF.

The QoS rule or PDR includes a packet filter set, which is used to specify a QoS flow for user plane data. That is, based on matching header characteristics of received application/service layer data (IP headers or Ethernet headers) against packet filters in the packet filter set, upon a successful match, the corresponding QoS flow is identified. This process is a process of mapping the application/service layer data to the QoS flow.

At the AS level, the data radio bearer (DRB) defines packet processing on the air interface (Uu). Packets transmitted on the same DRB have the same packet forwarding processing.

In the downlink, RAN maps downlink QoS flow to the DRB based on the QFI and its associated QoS Profile. RAN may establish independent DRBs for different QoS flows with different packet forwarding processing requirements. Multiple QoS flows belonging to the same packet data unit (PDU) session can also be mapped to the same DRB.

In the uplink, the UE determines the mapping rule for mapping the uplink QoS flow to the DRB in the following two ways:
(1) the mapping rule for mapping QoS flows to DRBs are explicitly configured to the UE through Radio Resource Control (RRC) signaling;
(2) the UE obtains the mapping rule through the mapping of reflective QoS flow to DRB, that is, the UE learns the mapping of the corresponding downlink QoS flow to DRB based on the received downlink data and applies it to the uplink. The UE always applies the most recently updated matching rule, regardless of whether the rule is derived through reflective QoS mapping or explicitly configured through RRC.

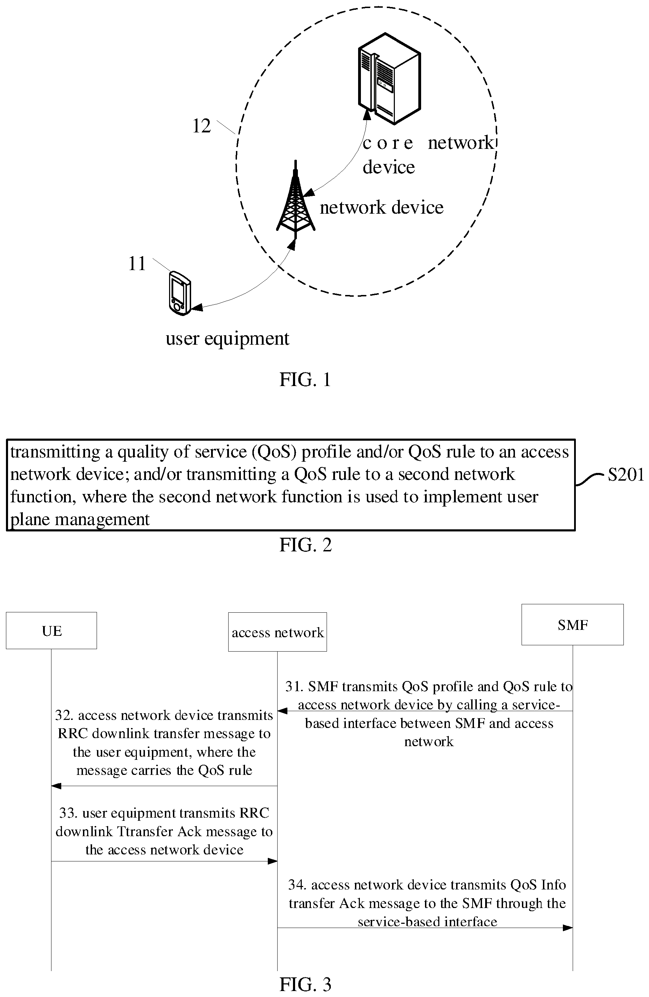

FIG. 1 is a structural diagram of a wireless communication system applicable to an embodiment of the present disclosure. The wireless communication system includes a user equipment 11 and a network device 12. The user equipment 11 may be a mobile phone, a tablet personal computer, a laptop computer or a notebook computer, a personal digital assistant (PDA), a handheld computer, a netbook, an ultra-mobile personal computer (UMPC), a mobile internet device (MID), an augmented reality (AR)/virtual reality (VR) device, a robot, a wearable device, a vehicle user equipment (VUE), a pedestrian user equipment (PUE), a smart home (a home appliance with wireless communication function, such as a refrigerator, a television, a washing machine or furniture, etc.), a game console, a personal computer (PC), a teller machine or a self-service machine, a sensing service terminal, various sensors, a smart camera and other terminal side devices. The wearable device includes: a smart watch, a smart band, a smart headset, a smart glasses, a smart jewelry (a smart bangle, a smart bracelet, a smart ring, a smart necklace, a smart anklet, a smart foot chain, etc.), a smart wristband, a smart clothing, etc. It is to be noted that the specific type of the user equipment 11 is not limited in the embodiments of the present disclosure. The network device 12 may include an access network device or a core network device. The access network device may also be referred to as a radio access network device, a radio access network (RAN), a radio access network function or a radio access network unit. The access network device may include a base station, a WLAN access point or a WiFi node, etc. The base station may be referred to as a node B, an evolved node B (eNB), an access point, a base transceiver station (BTS), a radio base station, a radio transceiver, a basic service set (BSS), an extended service set (ESS), a home node B, a home evolved node B, a transmitting receiving point (TRP), a perception signal sending device, a perception information receiving device or other appropriate terms in the field, as long as the same technical effect is achieved, the base station is not limited to a specific technical vocabulary. It is to be noted that in the embodiments of the present disclosure, only the base station in the NR system is used as an example for introduction, and the specific type of the base station is not limited. The core network device may include but is not limited to at least one of the following: core network node, core network function, mobility management entity (MME), access and mobility management function (AMF), session management function (SMF), user plane function (UPF), policy control function (PCF), policy and charging rules function unit (PCRF), edge application service discovery function (EASDF), unified data management (UDM), unified data repository (UDR), home subscriber server (HSS), centralized network configuration (CNC), network repository function (NRF), network exposure function (NEF), local NEF (or L-NEF), binding support function (BSF), application function (AF), sensing Function (SF), etc.

Embodiments of the present application are described hereinafter in connection with the drawings. The measurement, measurement configuration method and device, terminal and network device according to embodiments of the present application may be applied to a radio communication system. The radio communication system may be a system employing a fifth generation (5G) mobile communication technology (hereinafter referred to as a 5G system), and it can be understood by those skilled in the art that the 5G NR system is only an example and is not a limitation.

The embodiments of the present disclosure provide a measurement and measurement configuration method and device, terminal and network device, which can solve the QoS information transmission problem under a service-based RAN architecture, thereby reducing signaling transmission and lowering transmission delay.

The method and the device are based on the same application concept. Since the principles of solving the problems by the method and the device are similar, the implementation of the device and the method can refer to each other, and the repeated parts will not be repeated.

As shown in FIG. 2, one embodiment of the present disclosure provides an information transmission method, which is performed by a first network function and includes:
Step S201: transmitting a quality of service (QoS) profile and/or QoS rule to an access network device; and/or
transmitting a QoS rule to a second network function, where the second network function is used to implement user plane management;
where the first network function is used to implement session management, for example, the first network function is SMF in 5G.

It is to be noted that the QoS profile is used on the access network side, that is, the QoS profile is used by the access network device, and he access network device maps the QoS flow to the data radio bearer (DRB) based on the QoS profile and determines how to process the data on the air interface. The QoS rule is used for the user equipment, that is, the user equipment needs to classify and mark uplink user plane data based on the QoS rule, that is, determining association between the uplink service and the QoS flow.

In some embodiments, in one implementation, the specific implementation of transmitting a QoS profile and/or QoS rule to an access network device, includes:
transmitting the QoS profile and/or QoS rule to the access network device by calling a service-based interface with the access network.

It is to be noted that, in this case, the first network function directly transmits the QoS profile and/or the QoS rule to the access network device through the service-based interface.

In some embodiments, in this case, if the access network device receives the QoS rule directly from the first network function, the access network device needs to transmit the QoS rule to the user equipment.

It is to be noted that, for the first network function, in one case, if it needs to transmit the QoS profile, the QoS profile can only be directly transmitted to the access network device by calling the service-based interface with the access network; in another case, if it needs to transmit the QoS rule, one of the following ways can be used:
1. transmitting the QoS rules directly to the access network device by calling the service-based interface with the access network;
2. transmitting the QoS rule to the second network function, and transmitting the QoS rule to the user equipment through the second network function.

In some embodiments, the second network function may be, for example, a UPF. Since the QoS rule is directly used by the user equipment and the second network function can implement user plane management, the QoS rule can be transmitted to the user equipment via the second network function.

In some embodiments, after receiving the QoS rule, the second network function needs to transmit the QoS rule to the access network device first. In some embodiments, a point-to-point interface or a service-based interface can be used to transmit the QoS rule between the second network function and the access network device.

In some embodiments, in this case, if the access network device receives the QoS rule directly from the second network function, the access network device needs to transmit the QoS rule to the user equipment.

In some embodiments, in one implementation, the specific implementation of transmitting the QoS rule to the second network function, includes:
transmitting a session establishment request or a session modification request to the second network function, where the session establishment request or the session modification request includes the QoS rule.

That is to say, the QoS rule can be transmitted to the second network function via the session establishment request or the session modification request. For example, when the second network function is UPF, the QoS rule can be transmitted to UPF via an N4 session establishment request or an N4 session modification request.

In some embodiments, in one implementation, the method of the embodiment of the present disclosure further includes:
receiving a PDU session establishment request message or a PDU session modification request message, where the PDU session establishment request message or the PDU session modification request message carries a QoS requirement;
generating the QoS profile and/or QoS rule according to the QoS requirement.

It is to be noted that the QoS profile and/or QoS rule is generated based on the PDU session of the user equipment. In some embodiments, the user equipment may transmit a PDU session establishment request message to the first network function to request for establishing a PDU session. The PDU session establishment request message may carry a QoS requirement. The QoS requirement refers to QoS control information related to the PDU session that the user equipment expects or allows. The QoS control information includes but is not limited to QoS profile, QoS rule, etc. The first network device may obtain the QoS profile and/or QoS rule that need to be configured for the user equipment based on the QoS requirement. If the PDU session establishment request message does not carry the QoS requirement, the first network function may generate the QoS profile and/or QoS rule based on rules obtained from a policy control function.

After the PDU session is established, the PDU session can also be modified. In some embodiments, the user equipment can transmit a PDU session modification request message to the first network function to request for modifying the PDU session. The PDU session modification request message can carry a QoS requirement. The QoS requirement refers to QoS control information related to the PDU session that the user equipment expects or allows. The first network device can obtain the QoS profile and/or QoS rule that need to be modified based on the QoS requirement; if the PDU session modification request message does not carry the QoS requirement, the first network function can generate a modified QoS profile and/or QoS rule based on rules obtained from the policy control function.

It is to be noted that, as can be seen from the above description, the QoS profile and/or QoS rule can be issued and updated. In some embodiments, after the PDU session of the user equipment is released, the QoS profile and/or QoS rule related to the released session also need to be deleted. In some embodiments, in one implementation, the method further includes:
in a PDU session release process, deleting QoS information allocated when the PDU session is established for the user equipment, where the QoS information includes part or all of information in the QoS profile and/or QoS rule.

It is to be noted that in the PDU session release process, the first network function needs to delete part or all of the information in the QoS profile and/or QoS rule allocated to the user equipment's PDU session, thereby reducing the memory occupied by the QoS information.

In some embodiments, in one implementation, the implementation of in a PDU session release process, deleting QoS information allocated when the PDU session is established for the user equipment, includes:
receiving a PDU session release request transmitted by the user equipment through the access network device;
according to the PDU session release request, deleting the QoS information allocated when the PDU session is established for the user equipment.

That is to say, when the user equipment needs to release the PDU session, user equipment will transmit a PDU session release request to the first network function through the access network device, and the first network function can delete relevant information after receiving the PDU session release request. In some embodiments, the PDU session release request includes the QoS information that needs to be released; the first network function obtains the QoS information that needs to be released included in the PDU session release request and deletes the QoS information. In some embodiments, if the PDU session release request does not include the QoS information that needs to be released, the first network function can delete all QoS profiles and/or QoS rules related to the released PDU session. As for the case where the QoS information that needs to be released is not included in the PDU session release request, which QoS information needs to be deleted can be configured by stipulated in a protocol agreement.

In some embodiments, after releasing the PDU session, the user equipment also needs to delete part or all of information in the QoS rule allocated to it by the first network device.

In some embodiments, in the PDU session release process, the access network device also needs to delete part or all of information in the QoS profile assigned to it by the first network device. The access network device can delete the relevant information when it receives the PDU session release request sent by the user equipment, or the access network device can delete the relevant information when it receives a PDU session release response transmitted by the first network function.

The specific application of the embodiment of the present disclosure is illustrated hereinafter with an example in which the first network function is SMF, the second network function is UPF and the first network function issues QoS profile and QoS Rule.

Application scenario 1: in the RAN service-based architecture, SMF directly transmits a QoS profile to the access network device and a QoS Rule to the user equipment.

As shown in FIG. 3, a specific implementation process includes:

At step 31, the SMF transmits the QoS profile and QoS rule to the access network device by calling a service-based interface between the SMF and the access network.

For example, the SMF transmits a Qo information transfer response (Nran_QoS Info Transfer) message to the access network device, where the message carries the QoS profile and the QoS rule.

The QoS profile is used by the access network device; and the QoS rule is transparently transmitted by the access network device to the user equipment, and is used by the user equipment.

At step 32, the access network device transmits a radio resource control (RRC) downlink transfer message to the user equipment, where the message carries the QoS rule.

At step 33, after receiving the QoS rule transmitted by the access network device, the user equipment transmits a radio resource control downlink transfer response (RRC Downlink Transfer Ack) message to the access network device.

At step 34, after the access network device receives the RRC Downlink Transfer Ack message transmitted by the user equipment, the access network device transmits a QoS transfer response (QoS Info Transfer Ack) message to the SMF through the service-based interface.

Application scenario 2: in the access network service-based architecture, SMF transmits a QoS rule allocated to the user equipment, to the user equipment through UPF.

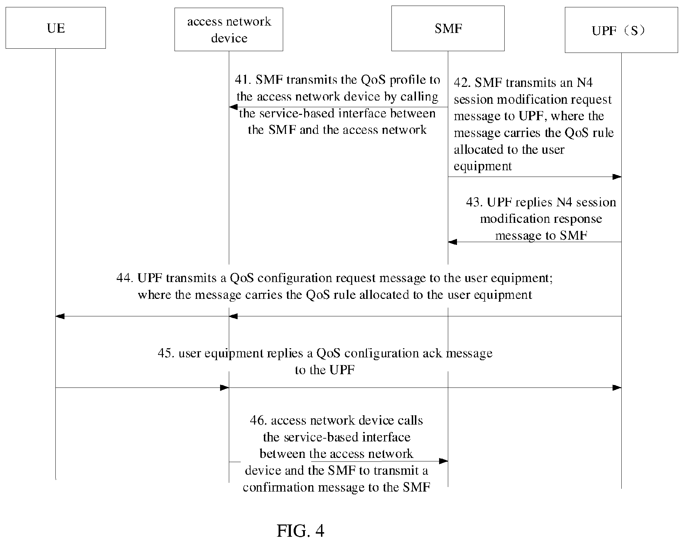

As shown in FIG. 4, the specific implementation process includes:

At step 41, the SMF transmits the QoS profile to the access network device by calling the service-based interface between the SMF and the access network; where the QoS profile is used by access network device for mapping between QoS flows and DRBs.

At step 42, the SMF transmits an N4 session modification request message to UPF, where the message carries the QoS rule allocated to the user equipment.

At step 43, after receiving the QoS rule allocated by SMF, UPF replies N4 session modification response message to SMF.

At step 44, the UPF transmits a QoS configuration request message to the user equipment; where the message carries the QoS rule allocated to the user equipment. Whether the UPF and the access network device use a point-to-point interface or a service-based interface for message transmission is not limited here.

At step 45, after receiving the QoS rule allocated by the SMF, the user equipment replies a QoS configuration ack message to the UPF.

At step 46, the access network device calls the service-based interface between the access network device and the SMF to transmit a confirmation message to the SMF. For example, the confirmation message may be a QoS information transfer response (Nran_QoS Info Transfer Ack) message.

Application scenario 3: in the access network service-based architecture, when the user equipment initiates a PDU session modification, the SMF directly updates the QoS profile to the access network device and updates the QoS Rule to the user equipment.

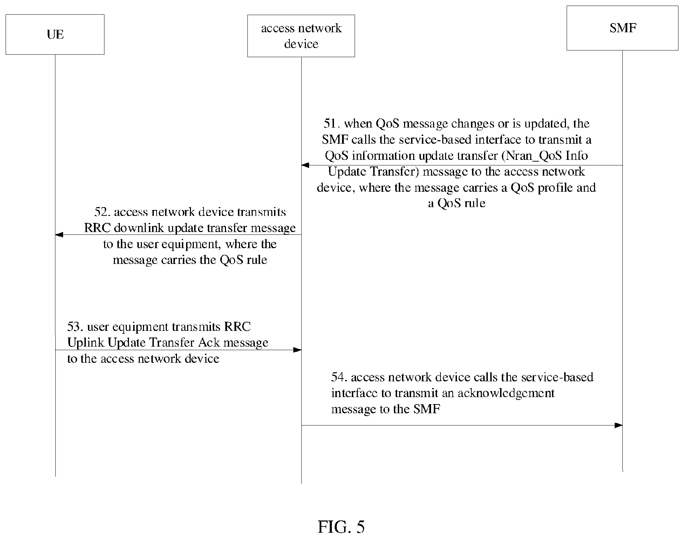

As shown in FIG. 5, the specific implementation process includes:

At step 51, when the QoS message changes or is updated, the SMF calls the service-based interface to transmit a QoS information update transfer (Nran_QoS Info Update Transfer) message to the access network device, where the message carries a QoS profile and a QoS rule.

At step 52, the access network device transmits a radio resource control (RRC) downlink update transfer message to the user equipment, where the message carries the QoS rule.

At step 53, after receiving the QoS rule, the user equipment transmits a radio resource control uplink update transfer response (RRC Uplink Update Transfer Ack) message to the access network device.

At step 54, after receiving an acknowledgement message transmitted by the user equipment, the access network device calls the service-based interface to transmit an acknowledgement message to the SMF. For example, the acknowledgement message may be a QoS information update transfer response (Nran_QoS Info Update Transfer Ack) message.

Application scenario 4: QoS information deletion

When a node that stores and manages QoS information receives a PDU session release request initiated by the user equipment, the QoS information needs to be deleted here. For example, SMF and access network device need to delete their stored QoS information upon receiving a PDU session release request from the user equipment.

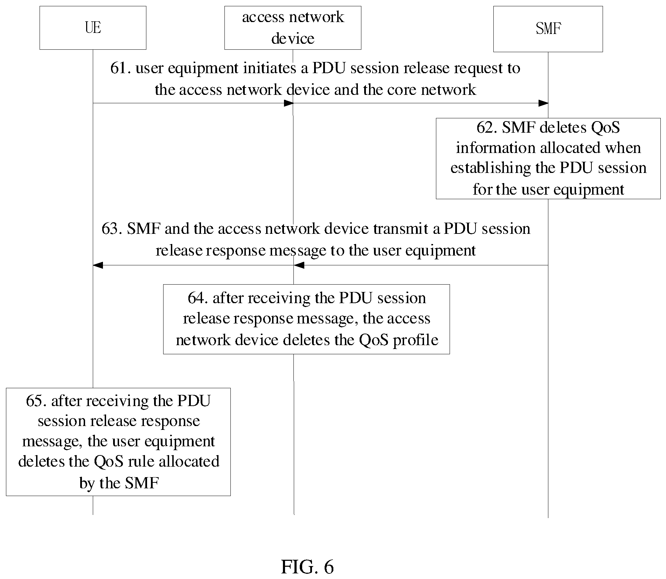

As shown in FIG. 6, the specific implementation process includes:
At step 61, the user equipment initiates a PDU session release request to the access network device and the core network.

At step 62, the SMF deletes QoS information allocated when establishing the PDU session for the user equipment.

At step 63, the SMF and the access network device transmit a PDU session release response message to the user equipment.

At step 64, after receiving the PDU session release response message, the access network device deletes the QoS profile.

At step 65, after receiving the PDU session release response message, the user equipment deletes the QoS rule allocated by the SMF.

In some embodiments, the access network device may also delete the QoS profile upon receiving the PDU session release request, that is, at this point, the access network device deletes the QoS profile before the SMF deletes the QoS information.

Application scenario 5: the user equipment initiates a session establishment carrying QoS information.

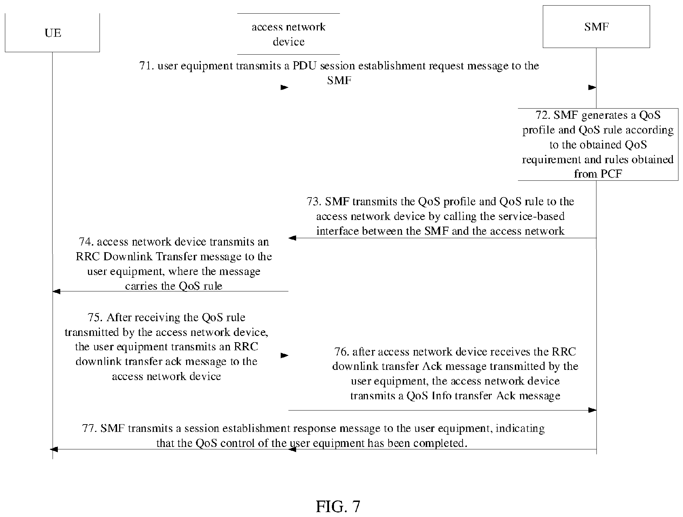

As shown in FIG. 7, the specific implementation process includes:

At step 71, the user equipment transmits a PDU session establishment request message to the SMF; where the PDU session establishment request message carries its own QoS requirement.

At step 72, the SMF generates a QoS profile and QoS rule according to the obtained QoS requirement and rules obtained from PCF.

At step 73, the SMF transmits the QoS profile and QoS rule to the access network device by calling the service-based interface between the SMF and the access network.

The QoS profile is used by access network devices; and QoS rule is transparently transmitted by access network devices to the user equipment and is used by the user equipment.

At step 74, the access network device transmits an RRC Downlink Transfer message to the user equipment, where the message carries the QoS rule.

At step 75, after receiving the QoS rule transmitted by the access network device, the user equipment transmits an RRC downlink transfer ack message to the access network device.

At step 76, after the access network device receives the RRC downlink transfer Ack message transmitted by the user equipment, the access network device transmits a QoS Info transfer Ack message to the SMF through the service-based interface.

At step 77, the SMF transmits a session establishment response message to the user equipment, indicating that the QoS control of the user equipment has been completed.

Application scenario 6: updated QoS information is carried when the user equipment initiates session modification.

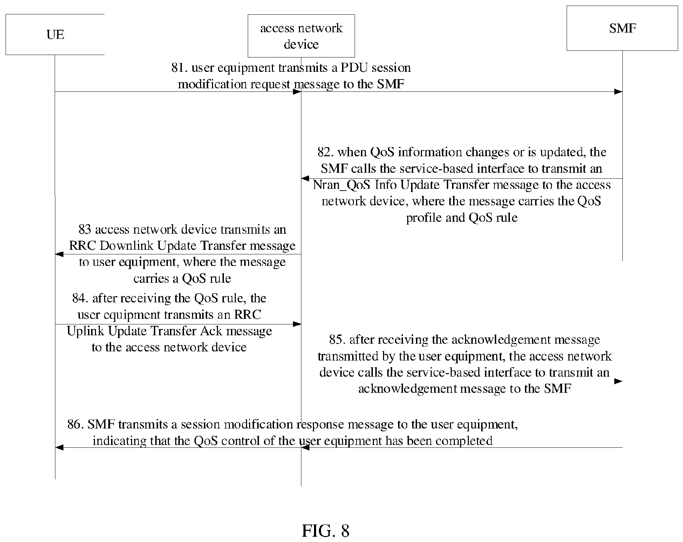

As shown in FIG. 8, the specific implementation process includes:

At step 81, the user equipment transmits a PDU session modification request message to the SMF; where the PDU session modification request message carries its own QoS requirement.

At step 82, when the QoS information changes or is updated, the SMF calls the service-based interface to transmit an Nran_QoS Info Update Transfer message to the access network device, where the message carries the QoS profile and QoS rule.

At step 83, the access network device transmits an RRC Downlink Update Transfer message to the terminal, where the message carries a QoS rule.

At step 84, after receiving the QoS rule, the user equipment transmits an RRC Uplink Update Transfer Ack message to the access network device.

At step 85, after receiving the acknowledgement message transmitted by the user equipment, the access network device calls the service-based interface to transmit an acknowledgement message to the SMF. For example, the acknowledgement message may be an Nran_QoS Info Update Transfer Ack message.

At step 86, the SMF transmits a session modification response message to the user equipment, indicating that the QoS control of the user equipment has been completed.

Application scenario 7: QoS information deletion initiated by user equipment

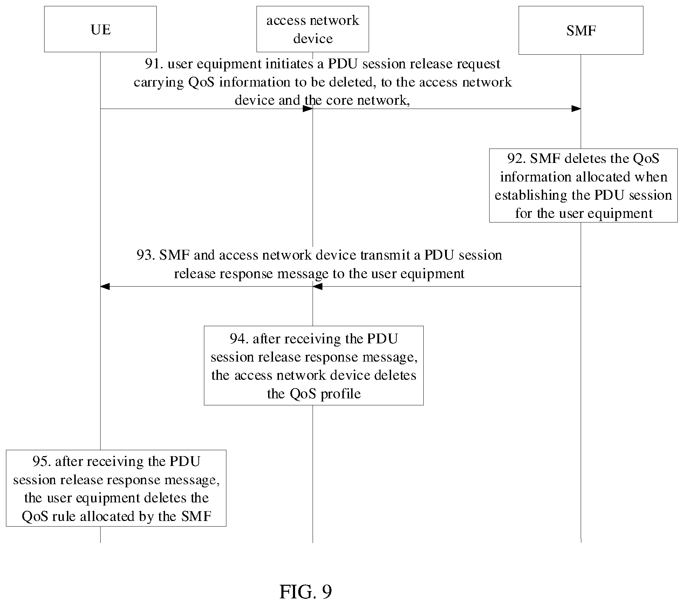

As shown in FIG. 9, the specific implementation process includes:

At step 91, the user equipment initiates a PDU session release request carrying QoS information to be deleted, to the access network device and the core network, where the QoS information includes part or all of information in the QoS profile and QoS rule.

At step 92, the SMF deletes the QoS information allocated when establishing the PDU session for the user equipment.

At step 93, the SMF and access network device transmit a PDU session release response message to the user equipment.

At step 94, after receiving the PDU session release response message, the access network device deletes the QoS profile.

At step 95, after receiving the PDU session release response message, the user equipment deletes the QoS rule allocated by the SMF.

In some embodiments, the access network device may also delete the QoS profile upon receiving the PDU session release request, that is, at this point, the access network device deletes the QoS profile before the SMF deletes the QoS information.

Application scenario 8: QoS information initiated by the user equipment is issued by UPF

In this embodiment, in the access network device service-based architecture, the SMF transmits a QoS rule allocated to the user equipment, to the user equipment through UPF.

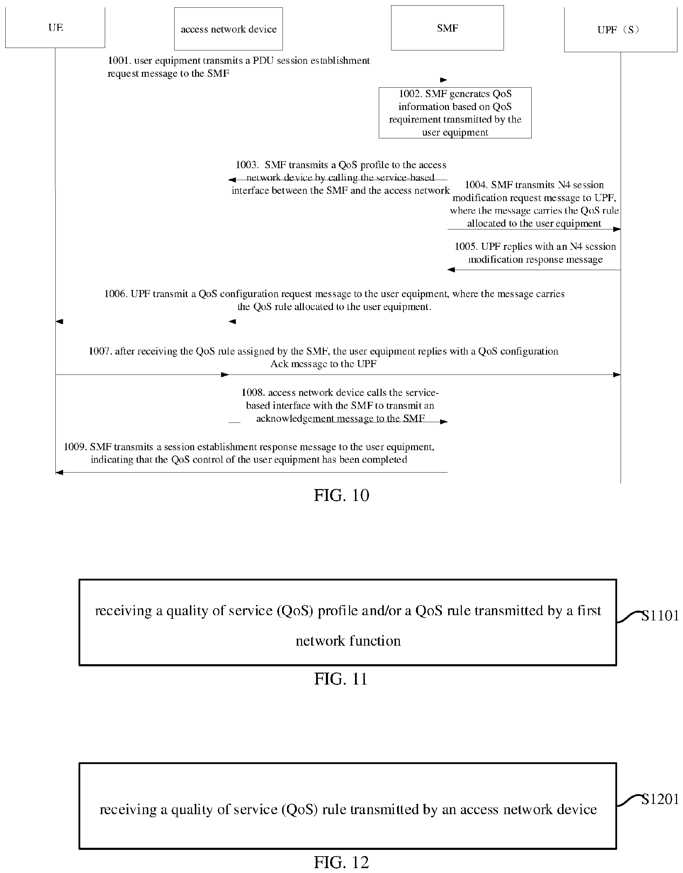

As shown in FIG. 10, the specific implementation process includes:

At step 1001, the user equipment transmits a PDU session establishment request message to the SMF; where the PDU session establishment request message carries its own QoS requirements.

At step 1002, the SMF generates QoS information based on the QoS requirement transmitted by the user equipment.

At step 1003, the SMF transmits a QoS profile to the access network device by calling the service-based interface between the SMF and the access network.

The QoS profile is used by access network devices to map QoS flows to DRBs.

At step 1004, the SMF transmits an N4 session modification request message to UPF, where the message carries the QoS rule allocated to the user equipment.

At step 1005, after receiving the QoS rule assigned by SMF, UPF replies with an N4 session modification response message.

At step 1006, the UPF transmit a QoS configuration request message to the user equipment, where the message carries the QoS rule allocated to the user equipment.

There is no limitation on whether the UPF and the access network device use a point-to-point interface or a service-based interface for message transmission.

At step 1007, after receiving the QoS rule assigned by the SMF, the user equipment replies with a QoS configuration Ack message to the UPF.

At step 1008, the access network device calls the service-based interface with the SMF to transmit an acknowledgement message to the SMF. For example, the acknowledgement message may be an Nran_QoS Info Transfer Ack message.

A step 1009, the SMF transmits a session establishment response message to the user equipment, indicating that the QoS control of the user equipment has been completed.

It is to be noted that the embodiment of the present disclosure proposes a QoS control method under the RAN service-based architecture, adopts a new QoS control mechanism, solves the transmission problem of QoS profiles and/or QoS rules based on RAN service-based architecture, and reduces signaling transmission and transmission delay compared with the existing 5G system.

The technical solution provided in the embodiment of the present disclosure can be applicable to a variety of systems, especially 5G systems. For example, the applicable system can be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a world-wide interoperability for microwave access (WiMAX) system, a 5G new radio (NR) system, etc. each of these various systems includes a terminal (also referred to as user equipment) and a network device. The system may also include a core network part, such as an evolved packet system (EPS), a 5G system (5GS), etc.

The terminal involved in the embodiments of the present disclosure may also be referred to as a terminal device, which may be a device that provides voice and/or data connectivity to a user, a handheld device with a wireless connection function, or other processing devices connected to a wireless modem. In different systems, the name of the terminal device may also be different. For example, in the 5G system, the terminal device may be referred to as a user equipment (UE). The wireless terminal device may communicate with one or more core networks (CN) via a radio access network (RAN). The wireless terminal device may be a mobile terminal device, such as a mobile phone (or a "cellular" phone) and a computer with a mobile terminal device. For example, the wireless terminal device may be a portable, pocket-sized, handheld, computer-built-in or vehicle-mounted mobile device that exchanges language and/or data with a radio access network, such as personal communication service (PCS) phones, cordless phones, session initiation protocol (SIP) phones, wireless local loop (WLL) stations, personal digital assistants (PDAs) and other devices. The wireless terminal device may also be referred to as a system, a subscriber unit, a subscriber station, a mobile station, a mobile, a remote station, an access point, a remote terminal device, an access terminal device, a user terminal device, a user agent, and a user device, but is not limited in the embodiments of the present disclosure.

The network device involved in the embodiments of the present disclosure may be a base station, which may include multiple cells for providing services for UEs. Depending on the specific application scenario, the base station may also be called an access point, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (evolutional Node B, eNB or e-NodeB) in the long term evolution (LTE) system, a 5G base station (gNB) in the 5G network architecture (next generation system), or a home evolved Node B (HeNB), a relay UE node (relay node), a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

As shown in FIG. 11, one embodiment of the present disclosure provides an information obtaining method, which is performed by an access network device and includes:
Step S1101: receiving a quality of service (QoS) profile and/or a QoS rule transmitted by a first network function;
where the first network function is used to implement session management.

In some embodiments, the method further includes:
in case of receiving the QoS rule transmitted by the first network function, transmitting the QoS rule to a user equipment.

In some embodiments, the receiving the QoS profile and/or the QoS rule transmitted by the first network function, includes:
receiving the QoS profile and/or rule transmitted by the first network function by calling a service-based interface between the first network function and the access network; or
receiving the QoS profile transmitted by the first network function by calling a service-based interface between the first network function and the access network, and/or receiving the QoS rule transmitted by the first network function through a second network function, where the second network function is used to implement user plane management.

In some embodiments, the method further includes:
in a packet data unit (PDU) session release process, deleting part or all of information included in the QoS profile.

In some embodiments, in the packet data unit PDU session release process, deleting part or all of the information included in the QoS profile, includes:
after receiving a PDU session release request transmitted by the user equipment or a PDU session release response transmitted by the first network function, deleting part or all of the information included in the QoS profile.

In some embodiments, the PDU session release request includes QoS information, and the QoS information includes part or all of the information included in the QoS profile.

In some embodiments, the method further includes:
receiving a PDU session establishment request message or a PDU session modification request message transmitting by the user equipment, where the PDU session establishment request message or the PDU session modification request message carries a QoS requirement;
transmitting the PDU session establishment request message or the PDU session modification request message to the first network function.

It is to be noted that all implementations in the above embodiments are applicable to the embodiments of the information obtaining method applied to the access network device side, and can achieve the same technical effect, which will not be repeated here.

As shown in FIG. 12, one embodiment of the present disclosure provides an information transmission method, which is performed by a user equipment and includes:
Step S1201: receiving a quality of service (QoS) rule transmitted by an access network device.

The QoS rule is transmitted to the access network device by a first network function or a second network function, the first network function is used to implement session management, and the second network function is used to implement user plane management.

In some embodiments, the method further includes:
transmitting a PDU session establishment request message or a PDU session modification request message to the first network function, where the PDU session establishment request message or the PDU session modification request message carries a QoS requirement.

In some embodiments, the method further includes:
transmitting a PDU session release request to the access network device, where the PDU session release request includes QoS information that needs to be released, and the QoS information includes part or all of information in the QoS profile and/or QoS rule.

In some embodiments, the method further includes:
in a packet data unit PDU session release process, deleting the QoS rule.

It is to be noted that all implementations in the above embodiments are applicable to the embodiments of the information transmission method applied to the UE side, and can achieve the same technical effect, which will not be repeated here.

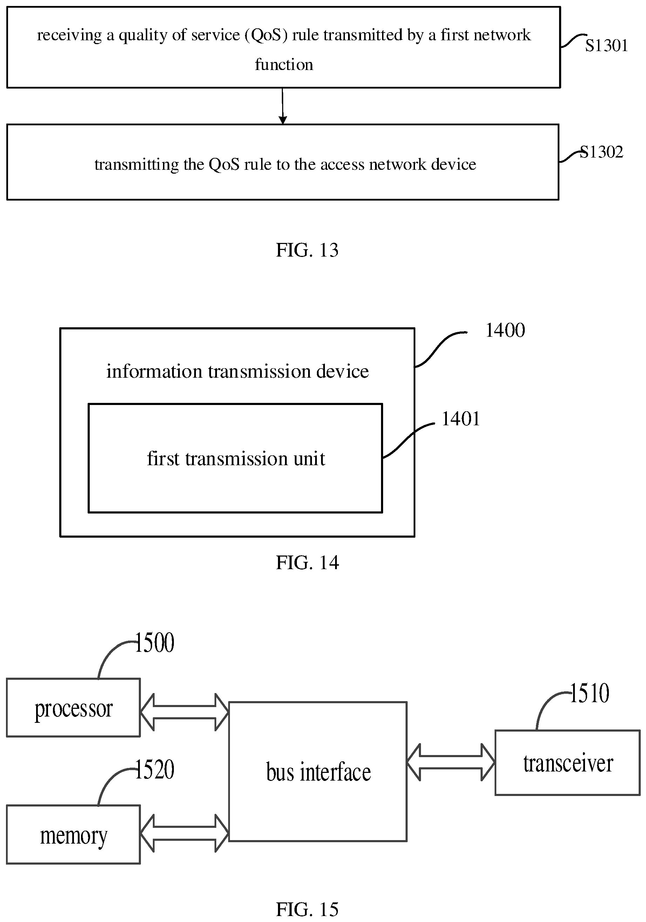

As shown in FIG. 13, one embodiment of the present disclosure provides an information transmission method, which is performed by a second network function and includes:
Step S1301: receiving a quality of service (QoS) rule transmitted by a first network function;
Step S1302: transmitting the QoS rule to the access network device;
where the second network function is used to implement user plane management.

In some embodiments, the receiving the QoS rule transmitted by the first network function, includes:
receiving a session establishment request or a session modification request transmitted by the first network function;
where the session establishment request or session modification request includes the QoS rule.

It is to be noted that all implementations in the above embodiments are applicable to the embodiments of the information transmission method applied to the second network function side, and can achieve the same technical effect, which will not be repeated here.

As shown in FIG. 14, one embodiment of the present disclosure provides an information transmission device 1400, which is applied to a first network function, including:
a first transmission unit 1401 used to transmit a quality of service (QoS) profile and/or QoS rule to an access network device; and/or
transmit a QoS rule to a second network function, where the second network function is used to implement user plane management;
where the first network function is used to implement session management.

In some embodiments, the first transmission unit 1401 is used to:
transmit the QoS profile and/or QoS rule to the access network device by calling a service-based interface with the access network.

In some embodiments, the implementation of sending the QoS rule to the second network function, includes:
transmitting a session establishment request or a session modification request to the second network function, where the session establishment request or the session modification request includes the QoS rule.

In some embodiments, the device further includes:
a fourth receiving unit used to receive a PDU session establishment request message or a PDU session modification request message, where the PDU session establishment request message or the PDU session modification request message carries a QoS requirement;
a generating unit used to generate the QoS profile and/or QoS rule according to the QoS requirement.

In some embodiments, the device further includes:
a first deleting unit used to, in a PDU session release process, delete QoS information allocated when the PDU session is established for the user equipment, where the QoS information includes part or all of information in the QoS profile and/or QoS rule.

In some embodiments, the first deleting unit is used to:
receive a PDU session release request transmitted by the user equipment through the access network device;
according to the PDU session release request, delete the QoS information allocated when the PDU session is established for the user equipment.

In some embodiments, the PDU session release request includes QoS information that needs to be released.

It is to be noted that the device embodiment is a device that corresponds to the above method embodiment in a one-to-one manner, and all implementations in the above method embodiment are applicable to the device embodiment and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 15, one embodiment of the present disclosure further provides a network function, which is a first network function, including a processor 1500, a transceiver 1510, a memory 1520, and a program stored in the memory 1520 and executable on the processor 1500. The transceiver 1510 is coupled to the processor 1500 and the memory 1520 through a bus interface. The processor 1500 is used to read the program in the memory and execute the following process:
transmitting a quality of service (QoS) profile and/or QoS rule to an access network device via the transceiver; and/or
transmitting a QoS rule to a second network function, where the second network function is used to implement user plane management;
where the first network function is used to implement session management.

The transceiver 1510 is used to receive and send data under the control of the processor 1500.

In FIG. 15, a bus architecture may include any number of interconnected bus and bridge. Specifically, various circuits of one or more processors, which are represented by the processor 1500, and one or more memories, which are represented by the memory 1520, are linked together. The bus architecture may link various other circuits, such as a peripheral device, voltage regulator and a power management circuit together. These features are well known in this field; therefore, this disclosure does not make further description on these features. The bus interface provides an interface. The transceiver 1510 may be multiple elements, including a transmitter and a receiver and provide units, which communicate with other devices on the transmission medium. The transmission medium includes radio channels, wired channels, optical cables, etc.

The processor 1500 is responsible for managing the bus architecture and the normal processing. The memory 1520 may be used to store data used by the processor 1500 for performing operations.

Optionally, the processor 1500 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the computer program in the memory and perform the following operations:
transmitting the QoS profile and/or QoS rule to the access network device by calling a service-based interface with the access network.

In some embodiments, the processor is used to read the computer program in the memory and perform the following operations:
transmitting a session establishment request or a session modification request to the second network function, where the session establishment request or the session modification request includes the QoS rule.

In some embodiments, the processor is used to read the computer program in the memory and perform the following operations:
receiving a PDU session establishment request message or a PDU session modification request message, where the PDU session establishment request message or the PDU session modification request message carries a QoS requirement;
generating the QoS profile and/or QoS rule according to the QoS requirement.

In some embodiments, the processor is used to read the computer program in the memory and perform the following operations:
in a PDU session release process, deleting QoS information allocated when the PDU session is established for the user equipment, where the QoS information includes part or all of information in the QoS profile and/or QoS rule.

In some embodiments, the processor is used to read the computer program in the memory and perform the following operations:
receiving a PDU session release request transmitted by the user equipment through the access network device;
according to the PDU session release request, deleting the QoS information allocated when the PDU session is established for the user equipment.

In some embodiments, the PDU session release request includes QoS information that needs to be released.

It is to be noted here that the above network function provided in the embodiment of the present disclosure can implement all the method steps implemented by the above method embodiment, and can achieve the same technical effect. The parts and beneficial effects of this embodiment that are the same as those of the method embodiment will not be described in detail here.

One embodiment of the present disclosure further provides a computer-readable storage medium, which stores a computer program. The computer program, when executed by a processor, implements the steps of the information transmission method applied to the first network function. The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

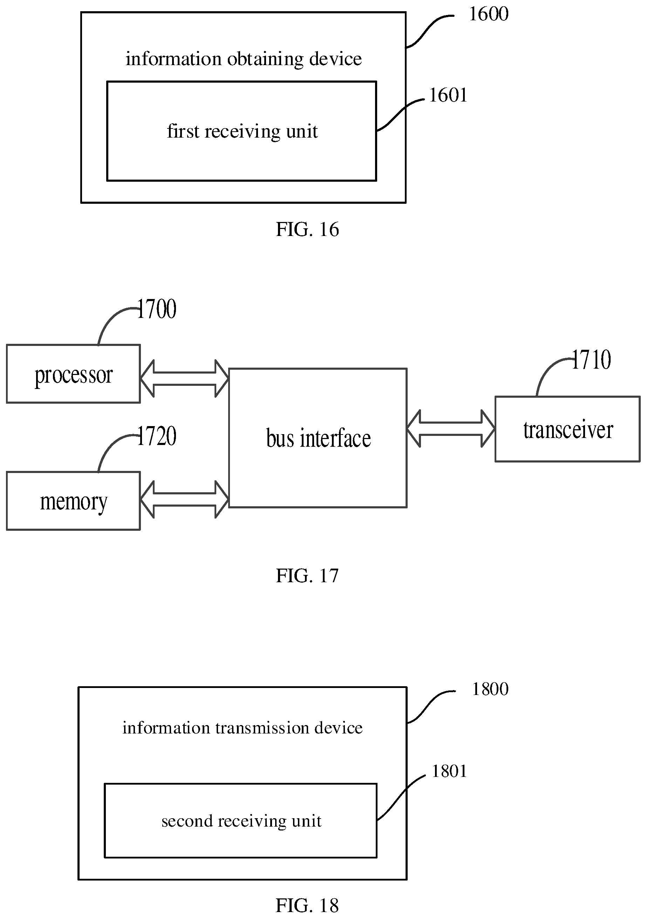

As shown in FIG. 16, one embodiment of the present disclosure provides an information obtaining device 1600, which is applied to an access network device, including:
a first receiving unit 1601 used to receive a quality of service (QoS) profile and/or a QoS rule transmitted by a first network function;
where the first network function is used to implement session management.

In some embodiments, the device further includes:
a third transmission unit used to, in case of receiving the QoS rule transmitted by the first network function, transmit the QoS rule to a user equipment.

In some embodiments, the first receiving unit 1601 is used to:
receive the QoS profile and/or rule transmitted by the first network function by calling a service-based interface between the first network function and the access network; or
receive the QoS profile transmitted by the first network function by calling a service-based interface between the first network function and the access network, and/or receive the QoS rule transmitted by the first network function through a second network function, where the second network function is used to implement user plane management.

In some embodiments, the device further includes:
a second deleting unit used to, in a packet data unit (PDU) session release process, delete part or all of information included in the QoS profile.

In some embodiments, the second deleting unit is used to:
after receiving a PDU session release request transmitted by the user equipment or a PDU session release response transmitted by the first network function, delete part or all of the information included in the QoS profile.

In some embodiments, the PDU session release request includes QoS information, and the QoS information includes part or all of the information included in the QoS profile.

In some embodiments, the device further includes:
a fifth receiving unit used to receive a PDU session establishment request message or a PDU session modification request message transmitting by the user equipment, where the PDU session establishment request message or the PDU session modification request message carries a QoS requirement;
a fourth transmission unit used to transmit the PDU session establishment request message or the PDU session modification request message to the first network function.

It is to be noted that the device embodiment is a device that corresponds to the above method embodiment in a one-to-one manner. All implementation methods in the above method embodiment are applicable to the device embodiment and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 17, one embodiment of the present disclosure further provides an access network device, including a processor 1700, a transceiver 1710, a memory 1720, and a program stored in the memory 1720 and executable on the processor 1700. The transceiver 1710 is coupled to the processor 1700 and the memory 1720 through a bus interface. The processor 1700 is used to read the program in the memory and execute the following process:
receiving by a transceiver, a quality of service (QoS) rule transmitted by an access network device.

The first network function is used to implement session management.

The transceiver 1710 is used to receive and send data under the control of the processor 1700.

In FIG. 17, a bus architecture may include any number of interconnected bus and bridge. Specifically, various circuits of one or more processors, which are represented by the processor 1700, and one or more memories, which are represented by the memory 1720, are linked together. The bus architecture may link various other circuits, such as a peripheral device, voltage regulator and a power management circuit together. These features are well known in this field; therefore, this disclosure does not make further description on these features. The bus interface provides an interface. The transceiver 1710 may be multiple elements, including a transmitter and a receiver and provide units, which communicate with other devices on the transmission medium. The transmission medium includes radio channels, wired channels, optical cables, etc.

The processor 1700 is responsible for managing the bus architecture and the normal processing. The memory 1720 may be used to store data used by the processor 1700 for performing operations.

Optionally, the processor 1700 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the computer program in the memory and perform the following operations:
in case of receiving the QoS rule transmitted by the first network function, transmitting the QoS rule to a user equipment.

In some embodiments, the processor is used to read the computer program in the memory and perform the following operations:
receiving the QoS profile and/or rule transmitted by the first network function by calling a service-based interface between the first network function and the access network; or
receiving the QoS profile transmitted by the first network function by calling a service-based interface between the first network function and the access network, and/or receiving the QoS rule transmitted by the first network function through a second network function, where the second network function is used to implement user plane management.

In some embodiments, the processor is used to read the computer program in the memory and perform the following operations:
in a packet data unit (PDU) session release process, deleting part or all of information included in the QoS profile.

In some embodiments, the processor is used to read the computer program in the memory and perform the following operations:
after receiving a PDU session release request transmitted by the user equipment or a PDU session release response transmitted by the first network function, deleting part or all of the information included in the QoS profile.

In some embodiments, the PDU session release request includes QoS information, and the QoS information includes part or all of the information included in the QoS profile.

In some embodiments, the processor is used to read the computer program in the memory and perform the following operations:
receiving a PDU session establishment request message or a PDU session modification request message transmitting by the user equipment, where the PDU session establishment request message or the PDU session modification request message carries a QoS requirement;
transmitting the PDU session establishment request message or the PDU session modification request message to the first network function.

It is to be noted here that the above access network device provided in the embodiment of the present disclosure can implement all the method steps implemented in the above method embodiment, and can achieve the same technical effect. The parts and beneficial effects that are the same as the method embodiment in this embodiment will not be described in detail here.

One embodiment of the present disclosure further provides a computer-readable storage medium, which stores a computer program. The computer program, when executed by a processor, implements the steps of the information obtaining method applied to the access network device. The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

As shown in FIG. 18, one embodiment of the present disclosure provides an information transmission device 1800, which is applied to a user equipment and includes:
a second receiving unit 1801 used to receive a quality of service (QoS) rule transmitted by an access network device.

The QoS rule is transmitted to the access network device by a first network function or a second network function, the first network function is used to implement session management, and the second network function is used to implement user plane management.

In some embodiments, the device further includes:
a fifth transmission unit used to transmit a PDU session establishment request message or a PDU session modification request message to the first network function, where the PDU session establishment request message or the PDU session modification request message carries a QoS requirement.

In some embodiments, the device further includes:
a sixth transmission unit used to transmit a PDU session release request to the access network device, where the PDU session release request includes QoS information that needs to be released, and the QoS information includes part or all of information in the QoS profile and/or QoS rule.

In some embodiments, the device further includes:
a third deleting unit used to, in a packet data unit PDU session release process, delete the QoS rule.

It is to be noted that all the device embodiment is a device that corresponds to the above method embodiment in a one-to-one manner. All implementations in the above method embodiment are applicable to the device embodiment and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

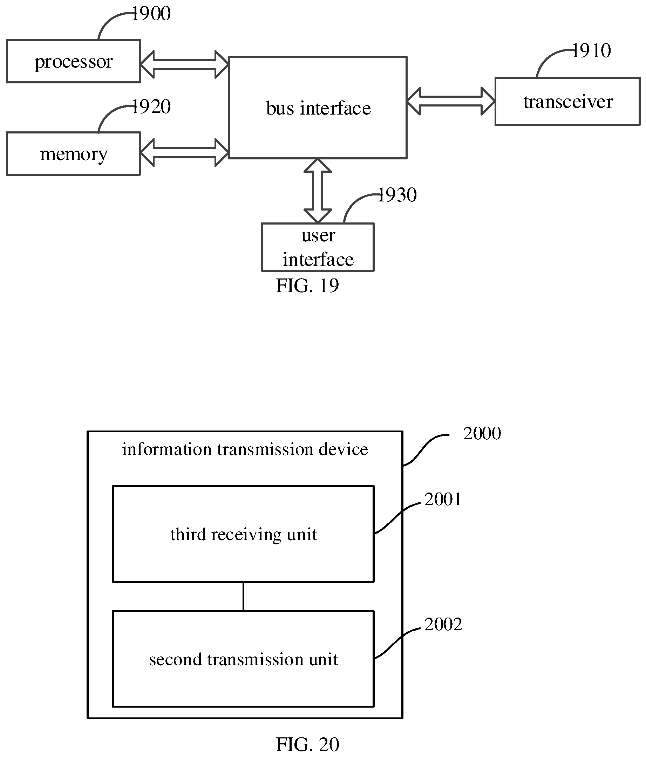

As shown in FIG. 19, one embodiment of the present disclosure further provides a user equipment, including a processor 1900, a transceiver 1910, a memory 1920, and a program stored in the memory 1920 and executable on the processor 1900. The transceiver 1910 is coupled to the processor 1900 and the memory 1920 through a bus interface. The processor 1900 is used to read the program in the memory and execute the following process:
receiving a quality of service (QoS) rule transmitted by an access network device;

The QoS rule is transmitted to the access network device by a first network function or a second network function, the first network function is used to implement session management, and the second network function is used to implement user plane management.

The transceiver 1910 is used to receive and send data under the control of the processor 1900.

In FIG. 19, a bus architecture may include any number of interconnected bus and bridge. Specifically, various circuits of one or more processors, which are represented by the processor 1900, and one or more memories, which are represented by the memory 1920, are linked together. The bus architecture may link various other circuits, such as a peripheral device, voltage regulator and a power management circuit together. These features are well known in this field; therefore, this disclosure does not make further description on these features. The bus interface provides an interface. The transceiver 1910 may be multiple elements, including a transmitter and a receiver and provide units, which communicate with other devices on the transmission medium. The transmission medium includes radio channels, wired channels, optical cables, etc. For different UEs, a user interface 1930 may be an interface that can be connected to external or internal devices. The connected devices include but are not limited to a small keyboard, a display, a speaker, a microphone, a joystick, etc.

The processor 1900 is responsible for managing the bus architecture and the normal processing. The memory 1920 may be used to store data used by the processor 1900 for performing operations.

Optionally, the processor 1900 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the program in the memory and execute the following process:
transmitting a PDU session establishment request message or a PDU session modification request message to the first network function, where the PDU session establishment request message or the PDU session modification request message carries a QoS requirement.

In some embodiments, the processor is used to read the program in the memory and execute the following process:
transmitting a PDU session release request to the access network device, where the PDU session release request includes QoS information that needs to be released, and the QoS information includes part or all of information in the QoS profile and/or QoS rule.

In some embodiments, the processor is used to read the program in the memory and execute the following process:
in a packet data unit PDU session release process, deleting the QoS rule.

It is to be noted here that the above user equipment provided in the embodiment of the present disclosure can implement all the method steps implemented in the above method embodiment and can achieve the same technical effect. The parts and beneficial effects that are the same as those in the method embodiment will not be described in detail here.

One embodiment of the present disclosure further provides a computer-readable storage medium, which stores a computer program. The computer program, when executed by a processor, implements the steps of the information transmission method applied to the user equipment. The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

As shown in FIG. 20, one embodiment of the present disclosure provides an information transmission device 2000, which is applied to a second network function, including:
a third receiving unit 2001 used to receive a quality of service (QoS) rule transmitted by a first network function;
a second transmission unit 2002 used to transmit the QoS rule to the access network device;
where the second network function is used to implement user plane management.

The second network function is used to implement user plane management.

In some embodiments, the third receiving unit 2001 is used to:
receive a session establishment request or a session modification request transmitted by the first network function;
where the session establishment request or session modification request includes the QoS rule.

It is to be noted that the device embodiment is a device that corresponds to the above method embodiment in a one-to-one manner. All implementation methods in the above method embodiment are applicable to the device embodiment and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a network function, which is a second network function. The structure of the second network function can be seen in FIG. 15, and will not be described in detail here.

The processor is used to read the computer program in the memory and perform the following operations:
receiving a quality of service (QoS) rule transmitted by a first network function;
transmitting the QoS rule to the access network device;
where the second network function is used to implement user plane management.

In some embodiments, the processor is used to read the computer program in the memory and perform the following operations:
receiving a session establishment request or a session modification request transmitted by the first network function;
where the session establishment request or session modification request includes the QoS rule.

One embodiment of the present disclosure further provides a computer-readable storage medium, which stores a computer program. The computer program, when executed by a processor, implements the steps of the information transmission method applied to the second network function. The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It is to be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. An information transmission method, performed by a first network function, comprising:
transmitting a quality of service (QoS) profile and/or QoS rule to an access network device; and/or
transmitting a QoS rule to a second network function, wherein the second network function is used to implement user plane management;
wherein the first network function is used to implement session management.

2. The method according to claim 1, wherein the transmitting a quality of service (QoS) profile and/or QoS rule to an access network device, includes:
transmitting the QoS profile and/or QoS rule to the access network device by calling a service-based interface with the access network device.

3. The method according to claim 1, wherein the transmitting a QoS rule to a second network function, includes:
transmitting a session establishment request or a session modification request to the second network function, wherein the session establishment request or the session modification request includes the QoS rule.

4. The method according to any one of claims 1 to 3, further comprising:
receiving a packet data unit (PDU) session establishment request message or a PDU session modification request message, wherein the PDU session establishment request message or the PDU session modification request message carries a QoS requirement; and
generating the QoS profile and/or QoS rule according to the QoS requirement.

5. The method according to any one of claims 1 to 3, further comprising:
deleting, in a packet data unit (PDU) session release process, QoS information allocated when the PDU session is established for a user equipment, wherein the QoS information includes part or all of information in the QoS profile and/or QoS rule.

6. The method according to claim 5, wherein the deleting, in a PDU session release process, QoS information allocated when the PDU session is established for a user equipment, includes :
receiving a PDU session release request transmitted by the user equipment through the access network device; and
according to the PDU session release request, deleting the QoS information allocated when the PDU session is established for the user equipment.

7. The method according to claim 6, wherein the PDU session release request includes Qos information that needs to be released.

8. An information obtaining method, performed by an access network device, comprising:
receiving a quality of service (QoS) profile and/or a QoS rule transmitted by a first network function;
wherein the first network function is used to implement session management.

9. The method according to claim 8, further comprising:
in case of receiving the QoS rule transmitted by the first network function, transmitting the QoS rule to a user equipment.

10. The method according to claim 8 or 9, wherein the receiving a quality of service (QoS) profile and/or a QoS rule transmitted by a first network function, includes:
receiving the QoS profile and/or QoS rule transmitted by the first network function by calling a service-based interface between the first network function and the access network; or
receiving the QoS profile transmitted by the first network function by calling a service-based interface between the first network function and the access network, and/or receiving the QoS rule transmitted by the first network function through a second network function, where the second network function is used to implement user plane management.

11. The method according to claim 8 or 9, further comprising:
deleting, in a packet data unit (PDU) session release process, part or all of information included in the QoS profile.

12. The method according to claim 11, wherein the deleting, in a packet data unit (PDU) session release process, part or all of information included in the QoS profile, includes:
after receiving a PDU session release request transmitted by the user equipment or a PDU session release response transmitted by the first network function, deleting part or all of the information included in the QoS profile.

13. The method according to claim 12, wherein the PDU session release request includes QoS information, and the QoS information includes part or all of the information included in the QoS profile.

14. The method according to claim 8 or 9, further comprising:
receiving a PDU session establishment request message or a PDU session modification request message transmitting by the user equipment, wherein the PDU session establishment request message or the PDU session modification request message carries a QoS requirement; and
transmitting the PDU session establishment request message or the PDU session modification request message to the first network function.

15. An information transmission method, performed by a user equipment, comprising:
receiving a quality of service (QoS) rule transmitted by an access network device;
wherein the QoS rule is transmitted to the access network device by a first network function or a second network function, the first network function is used to implement session management, and the second network function is used to implement user plane management.

16. The method according to claim 15, further comprising:
transmitting a PDU session establishment request message or a PDU session modification request message to the first network function, wherein the PDU session establishment request message or the PDU session modification request message carries a QoS requirement.

17. The method according to claim 15, further comprising:
transmitting a PDU session release request to the access network device, wherein the PDU session release request includes QoS information that needs to be released, and the QoS information includes part or all of information in the QoS profile and/or QoS rule.

18. The method according to claim 15, further comprising:
in a packet data unit PDU session release process, deleting the QoS rule.

19. An information transmission method, performed by a second network function, comprising:
receiving a quality of service (QoS) rule transmitted by a first network function; and
transmitting the QoS rule to an access network device;
wherein the second network function is used to implement user plane management.

20. The method according to claim 19, wherein the receiving a quality of service (QoS) rule transmitted by a first network function, includes:
receiving a session establishment request or a session modification request transmitted by the first network function;
wherein the session establishment request or session modification request includes the QoS rule.

21. A communication device which is a first network function, comprising a memory, a transceiver, and a processor;
wherein the memory is used to store a computer program; the transceiver is used to send and receive data under control of the processor; the processor is used to read the computer program in the memory and perform the following operations:
transmitting a quality of service (QoS) profile and/or QoS rule to an access network device via the transceiver; and/or
transmitting a QoS rule to a second network function, wherein the second network function is used to implement user plane management;
wherein the first network function is used to implement session management.

22. The device according to claim 21, wherein the processor is used to read the computer program in the memory and perform the following operations:
transmitting the QoS profile and/or QoS rule to the access network device by calling a service-based interface with the access network.

23. The device according to claim 21, wherein the processor is used to read the computer program in the memory and perform the following operations:
transmitting a session establishment request or a session modification request to the second network function, wherein the session establishment request or the session modification request includes the QoS rule.

24. The device according to any one of claims 21 to 23, wherein the processor is used to read the computer program in the memory and perform the following operations:
receiving a PDU session establishment request message or a PDU session modification request message, wherein the PDU session establishment request message or the PDU session modification request message carries a QoS requirement;
generating the QoS profile and/or QoS rule according to the QoS requirement.

25. The device according to any one of claims 21 to 23, wherein the processor is used to read the computer program in the memory and perform the following operations:
in a PDU session release process, deleting QoS information allocated when the PDU session is established for the user equipment, where the QoS information includes part or all of information in the QoS profile and/or QoS rule.

26. The device according to claim 25, wherein the processor is used to read the computer program in the memory and perform the following operations:
receiving a PDU session release request transmitted by the user equipment through the access network device;
according to the PDU session release request, deleting the QoS information allocated when the PDU session is established for the user equipment.

27. The device according to claim 26, wherein the PDU session release request includes QoS information that needs to be released.

28. A communication device which is an access network device, comprising a memory, a transceiver, and a processor;
wherein the memory is used to store a computer program; the transceiver is used to send and receive data under control of the processor; the processor is used to read the computer program in the memory and perform the following operations:
receiving a quality of service (QoS) profile and/or a QoS rule transmitted by a first network function via the transceiver;
wherein the first network function is used to implement session management.

29. The device according to claim 28, wherein the processor is used to read the computer program in the memory and perform the following operations:
in case of receiving the QoS rule transmitted by the first network function, transmitting the QoS rule to a user equipment.

30. The device according to claim 28 or 29, wherein the processor is used to read the computer program in the memory and perform the following operations:
receiving the QoS profile and/or rule transmitted by the first network function by calling a service-based interface between the first network function and the access network; or
receiving the QoS profile transmitted by the first network function by calling a service-based interface between the first network function and the access network, and/or receiving the QoS rule transmitted by the first network function through a second network function, where the second network function is used to implement user plane management.

31. The device according to claim 28 or 29, wherein the processor is used to read the computer program in the memory and perform the following operations:
deleting, in a packet data unit (PDU) session release process, part or all of information included in the QoS profile.

32. The device according to claim 31, wherein the processor is used to read the computer program in the memory and perform the following operations:
after receiving a PDU session release request transmitted by the user equipment or a PDU session release response transmitted by the first network function, deleting part or all of the information included in the QoS profile.

33. The device according to claim 32, wherein the PDU session release request includes QoS information, and the QoS information includes part or all of the information included in the QoS profile.

34. The device according to claim 28 or 29, wherein the processor is used to read the computer program in the memory and perform the following operations:
receiving a PDU session establishment request message or a PDU session modification request message transmitting by the user equipment, wherein the PDU session establishment request message or the PDU session modification request message carries a QoS requirement;
transmitting the PDU session establishment request message or the PDU session modification request message to the first network function.

35. A communication device which is a user equipment, comprising a memory, a transceiver, and a processor;
wherein the memory is used to store a computer program; the transceiver is used to send and receive data under control of the processor; the processor is used to read the computer program in the memory and perform the following operations:
receiving a quality of service (QoS) rule transmitted by an access network device.
wherein the QoS rule is transmitted to the access network device by a first network function or a second network function, the first network function is used to implement session management, and the second network function is used to implement user plane management.

36. The device according to claim 35, wherein the processor is used to read the computer program in the memory and perform the following operations:
transmitting a PDU session establishment request message or a PDU session modification request message to the first network function, where the PDU session establishment request message or the PDU session modification request message carries a QoS requirement.

37. The device according to claim 35, wherein the processor is used to read the computer program in the memory and perform the following operations:
transmitting a PDU session release request to the access network device, wherein the PDU session release request includes QoS information that needs to be released, and the QoS information includes part or all of information in the QoS profile and/or QoS rule.

38. The device according to claim 35, wherein the processor is used to read the computer program in the memory and perform the following operations:
in a packet data unit PDU session release process, deleting the QoS rule.

39. A communication device which is a second network function, comprising a memory, a transceiver, and a processor;
wherein the memory is used to store a computer program; the transceiver is used to send and receive data under control of the processor; the processor is used to read the computer program in the memory and perform the following operations:
receiving a quality of service (QoS) rule transmitted by a first network function;
transmitting the QoS rule to an access network device;
wherein the second network function is used to implement user plane management.

40. The device according to claim 39, wherein the processor is used to read the computer program in the memory and perform the following operations:
receiving a session establishment request or a session modification request transmitted by the first network function;
wherein the session establishment request or session modification request includes the QoS rule.

41. An information transmission device, applied to a first network function, comprising:
a first transmission unit used to transmit a quality of service (QoS) profile and/or QoS rule to an access network device; and/or
transmit a QoS rule to a second network function, wherein the second network function is used to implement user plane management;
wherein the first network function is used to implement session management.

42. The device according to claim 41, wherein the first transmission unit is used to:
transmit the QoS profile and/or QoS rule to the access network device by calling a service-based interface with the access network device.

43. The device according to claim 41, wherein the transmitting a QoS rule to a second network function, includes:
transmitting a session establishment request or a session modification request to the second network function, wherein the session establishment request or the session modification request includes the QoS rule.

44. The device according to any one of claims 41 to 43, wherein the device further includes:
a fourth receiving unit used to receive a PDU session establishment request message or a PDU session modification request message, wherein the PDU session establishment request message or the PDU session modification request message carries a QoS requirement;
a generating unit used to generate the QoS profile and/or QoS rule according to the QoS requirement.

45. The device according to any one of claims 41 to 43, wherein the device further includes:
a first deleting unit used to delete, in a PDU session release process, QoS information allocated when the PDU session is established for the user equipment, wherein the QoS information includes part or all of information in the QoS profile and/or QoS rule.

46. The device according to claim 45, wherein the first deleting unit is used to:
receive a PDU session release request transmitted by the user equipment through the access network device;
according to the PDU session release request, delete the QoS information allocated when the PDU session is established for the user equipment.

47. The device according to claim 46, wherein the PDU session release request includes Qos information that needs to be released.

48. An information obtaining device, applied to an access network device, comprising:
a first receiving unit used to receive a quality of service (QoS) profile and/or a QoS rule transmitted by a first network function;
wherein the first network function is used to implement session management.

49. The device according to claim 48, wherein the device further includes:
a third transmission unit used to, in case of receiving the QoS rule transmitted by the first network function, transmit the QoS rule to a user equipment.

50. The device according to claim 48 or 49, wherein the first receiving unit is used to:
receive the QoS profile and/or rule transmitted by the first network function by calling a service-based interface between the first network function and the access network; or
receive the QoS profile transmitted by the first network function by calling a service-based interface between the first network function and the access network, and/or receive the QoS rule transmitted by the first network function through a second network function, where the second network function is used to implement user plane management.

51. The device according to claim 48 or 49, wherein the device further includes:
a second deleting unit used to delete, in a packet data unit (PDU) session release process, part or all of information included in the QoS profile.

52. The device according to claim 51, wherein the second deleting unit is used to:
after receiving a PDU session release request transmitted by the user equipment or a PDU session release response transmitted by the first network function, delete part or all of the information included in the QoS profile.

53. The device according to claim 51, wherein the PDU session release request includes QoS information, and the QoS information includes part or all of the information included in the QoS profile.

54. The device according to claim 48 or 49, wherein the device further includes:
a fifth receiving unit used to receive a PDU session establishment request message or a PDU session modification request message transmitting by the user equipment, wherein the PDU session establishment request message or the PDU session modification request message carries a QoS requirement;
a fourth transmission unit used to transmit the PDU session establishment request message or the PDU session modification request message to the first network function.

55. An information transmission device, applied to a user equipment, comprising:
a second receiving unit used to receive a quality of service (QoS) rule transmitted by an access network device;
wherein the QoS rule is transmitted to the access network device by a first network function or a second network function, the first network function is used to implement session management, and the second network function is used to implement user plane management.

56. The device according to claim 55, wherein the device further includes:
a fifth transmission unit used to transmit a PDU session establishment request message or a PDU session modification request message to the first network function, where the PDU session establishment request message or the PDU session modification request message carries a QoS requirement.

57. The device according to claim 55, wherein the device further includes:
a sixth transmission unit used to transmit a PDU session release request to the access network device, wherein the PDU session release request includes QoS information that needs to be released, and the QoS information includes part or all of information in the QoS profile and/or QoS rule.

58. The device according to claim 55, wherein the device further includes:
a third deleting unit used to, in a packet data unit PDU session release process, delete the QoS rule.

59. An information transmission device, applied to a second network function, comprising:
a third receiving unit used to receive a quality of service (QoS) rule transmitted by a first network function; and
a second transmission unit used to transmit the QoS rule to the access network device;
wherein the second network function is used to implement user plane management.

60. The device according to claim 59, wherein the first receiving unit is used to:
receive a session establishment request or a session modification request transmitted by the first network function;
wherein the session establishment request or session modification request includes the QoS rule.

61. A processor-readable storage medium, comprising a computer program stored thereon; wherein the computer program is used to cause a processor to execute the method according to any one of claims 1 to 50.
